(19)

**Europäisches Patentamt**
**European Patent Office**
**Office européen des brevets**

(11) **EP 4 554 101 A1**

(12) **EUROPEAN PATENT APPLICATION**
published in accordance with Art. 153(4) EPC

(43) Date of publication:
**14.05.2025 Bulletin 2025/20**

(21) Application number: **23835424.5**

(22) Date of filing: **29.06.2023**

(51) International Patent Classification (IPC):
*H04B 3/23* (2006.01)

(52) Cooperative Patent Classification (CPC):
**H04M 9/082; H04B 3/23**

(86) International application number:
**PCT/JP2023/024233**

(87) International publication number:
**WO 2024/009892 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.07.2022 JP 2022109997**

(71) Applicant: **TRANSTRON INC.**
**Yokohama-shi, Kanagawa 222-0033 (JP)**

(72) Inventor: **SATOMI Yuki**
**Yokohama-shi, Kanagawa 222-0033 (JP)**

(74) Representative: **Winter, Brandl - Partnerschaft
mbB
Alois-Steinecker-Straße 22
85354 Freising (DE)**

(54) **ECHO SUPPRESSING DEVICE, ECHO SUPPRESSING METHOD, AND ECHO SUPPRESSING PROGRAM**

(57) Echo removal can be performed using an appropriate adaptive filter to which erroneous learning has not been performed. An echo suppressing device removes an echo from an input signal picked up by a microphone of a terminal including a speaker and the microphone. Included are: a reference signal adjustment unit that generates a plurality of delay reference signals by applying a plurality of delay times different from one another to a reference signal transmitted through a receiver-side signal path for transmitting a signal to the speaker; a filter generation unit that obtains a plurality of convergence values of an adaptive filter based on each of the plurality of delay reference signals; a filter correction unit that compares the plurality of the convergence values and makes a first filter coefficient smaller than the convergence values, the first filter coefficient being a filter coefficient for an element that does not change in accordance with a change in the delay time; and an echo removal unit that removes a linear echo by applying the adaptive filter corrected by the filter correction unit to the input signal.

FIG. 2

EP 4 554 101 A1

**Description**

Technical Field

The present invention relates to an echo suppressing device, an echo suppressing method, and an echo suppressing program.

Background Art

Patent Document 1 discloses an echo canceller apparatus that convolves a first filter coefficient or a second filter coefficient with a reception signal to generate first and second echo replica signals, and outputs a signal in a call frequency band of the first echo replica signal as an echo canceller signal. This apparatus corrects the second filter coefficient so as to minimize a signal in which the second echo replica signal is subtracted from a signal of a discretionary measurement frequency in an input sound signal, and sets a filter coefficient by obtaining the first filter coefficient paired in advance with the second filter coefficient.

Citation List

Patent Document

Patent Document 1: JP 2010-11265 A

Summary of Invention

Technical Problem

However, the invention described in Patent Document 1 may fail to secure a sufficient echo suppression amount in a case of having an erroneous solution in learning of a coefficient of an adaptive filter.
The present invention has been made in view of such circumstances, and an object thereof is to provide an echo suppressing device, an echo suppressing method, and an echo suppressing program that can perform echo removal using an appropriate adaptive filter to which erroneous learning has not been performed.

Solution to Problem

In order to solve the above problem, an echo suppressing device according to the present invention is, for example, an echo suppressing device that removes an echo from an input signal picked up by a microphone of a terminal including a speaker and the microphone, the echo suppressing device includes: a reference signal adjustment unit configured to generate a plurality of delay reference signals by applying a plurality of delay times different from one another to a reference signal transmitted through a receiver-side signal path for transmitting a signal to the speaker; a filter generation unit configured to obtain a plurality of convergence values of an adaptive filter based on each of the plurality of delay reference signals; a filter correction unit configured to compare the plurality of convergence values and correct the adaptive filter to make a first filter coefficient smaller than the convergence values, the first filter coefficient being a filter coefficient for an element that does not change in accordance with a change in the delay times; and an echo removal unit configured to remove a linear echo by applying the adaptive filter corrected by the filter correction unit to the input signal.
An echo suppressing method according to another aspect of the present invention includes, for example, a reference signal adjustment step of generating a plurality of delay reference signals by applying a plurality of delay times different from one another to a reference signal transmitted through a receiver-side signal path for transmitting a signal to a speaker of a terminal including the speaker and a microphone; a filter generation step of obtaining a plurality of convergence values of an adaptive filter based on each of the plurality of delay reference signals; a filter correction step of comparing the plurality of convergence values and correcting the adaptive filter to make a first filter coefficient smaller than the convergence values, the first filter coefficient being a filter coefficient for an element that does not change in accordance with a change in the delay time; and an echo removal step of removing a linear echo by applying the adaptive filter corrected by the filter correction step to an input signal picked up by the microphone.
An echo suppressing program according to another aspect of the present invention causes, for example, a computer to function as: a reference signal adjustment unit configured to generate a plurality of delay reference signals by applying a plurality of delay times different from one another to a reference signal transmitted through a receiver-side signal path for transmitting a signal to a speaker of a terminal including the speaker and a microphone; a filter generation unit configured to obtain a plurality of convergence values of an adaptive filter based on each of the plurality of delay reference signals; a filter correction unit configured to compare the plurality of convergence values and correct the adaptive filter to make a first filter coefficient smaller than the convergence values, the first filter coefficient being a filter coefficient for an element that does not change in accordance with a change in the delay time; and an echo removal unit configured to remove a linear echo by applying the adaptive filter corrected by the filter correction unit to an input signal picked up by the microphone.

According to a plurality of aspects of the present invention, as a result of obtaining a plurality of convergence values of an adaptive filter based on a plurality of delay reference signals generated by applying a plurality of delay times different from one another to a reference signal transmitted through a receiver-side signal path for transmitting a signal to a speaker, and comparing the plurality of convergence values, a first filter coefficient, which is a filter coefficient for an element that does not change in accordance with a change in the delay time, is made smaller than the convergence values and a linear echo is removed from an input signal using the corrected adaptive filter, and therefore, echo removal can be performed using an appropriate adaptive filter to which erroneous learning has not been performed.

The filter correction unit may set the first filter coefficient to 0. This can reduce the calculation load, and can reduce the processing load of an arithmetic device. Since the processing load of the arithmetic device can be reduced, the echo suppressing device can be configured inexpensively.

The filter correction unit may gradually decrease the first filter coefficient from the convergence value. This can prevent noise or excessive removal due to rapid changing in the shape of the adaptive filter.

The filter correction unit may set, as the first filter coefficient, a filter coefficient in a case where the convergence value is equal to or greater than a threshold among elements that do not change in accordance with a change in the delay time. This can reduce the filter coefficient of an element having a large influence on removal of the linear echo.

The filter correction unit may obtain the threshold based on the convergence value. This can automatically determine an appropriate threshold in accordance with the situation of a reference signal.

The reference signal adjustment unit may continuously generate a plurality of the delay reference signals while acquiring the reference signal, the filter generation unit may continuously generate a plurality of the linear filters, and the filter correction unit may continuously correct the adaptive filter. This can appropriately remove the echo even when the echo path changes during use.

A double-talk detection unit that detects whether it is in a single-talk state or a double-talk state may be included, and when the double-talk state is not detected, the filter correction unit may make the first filter coefficient smaller than the convergence value. While there is a possibility that the effect of the processing is small because there are many disturbances in a situation where double-talk occurs, this configuration can reduce the calculation load by stopping the processing with the small effect.

The reference signal adjustment unit may generate the delay reference signal only once before the echo removal unit removes a linear echo. This can lead to achievement with a small calculation load, and can eventually configure an echo suppressing device 1 inexpensively.

Advantageous Effects of Invention

The present invention can effectively remove the echo while reducing the processing load on the arithmetic device.

Brief Description of Drawings

FIG. 1 is a view schematically illustrating a voice communication system 100 provided with an echo suppressing device 1.
FIG. 2 is a block diagram illustrating a schematic configuration of the echo suppressing device 1.
FIG. 3 is a flowchart showing a flow of processing performed by the echo suppressing device 1.
FIG. 4 is a graph showing processing of comparing a plurality of convergence values of an adaptive filter with one another.
FIG. 5 is a block diagram illustrating a schematic configuration of an echo suppressing device 1A.
FIG. 6 is a block diagram illustrating a schematic configuration of an echo suppressing device 2.
FIG. 7 is a flowchart showing a flow of processing performed by the echo suppressing device 2.
FIG. 8 is a block diagram illustrating a schematic configuration of an echo suppressing device 3.
FIG. 9 is a flowchart showing a flow of processing performed by the echo suppressing device 3.

Description of Embodiments

Embodiments of an echo suppressing device according to the present invention will be described below in detail with reference to the drawings. The echo suppressing device is a device that suppresses an echo generated during a call in a voice communication system, and is used for a product in which a speaker and a microphone are incorporated, for example, a headset for a telephone conference or a video conference, a vehicle-mounted call device, an intercom, and the like.

<First Embodiment>

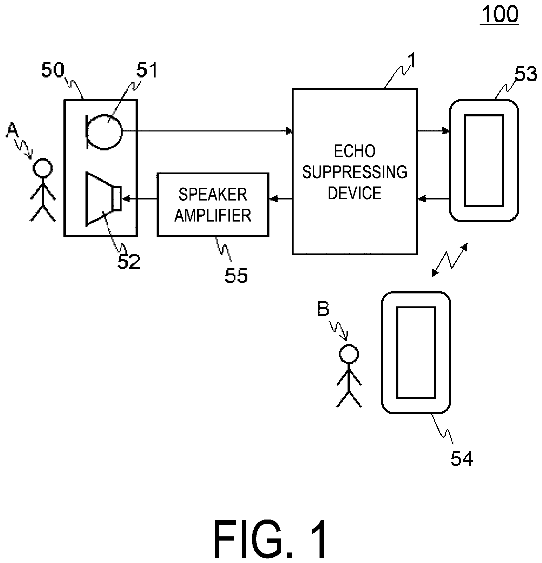

FIG. 1 is a view schematically illustrating the voice communication system 100 provided with the echo suppressing device 1 according to the first embodiment. The voice communication system 100 primarily includes a terminal 50 (e.g., a vehicle-mounted device, a conference system, and a mobile terminal) including a microphone 51 and a speaker 52, two communication devices 53 and 54, a speaker amplifier 55, and the echo suppressing device 1.

The voice communication system 100 is a system in which a user (a user A on a near-end side) using the terminal 50 (a near-end terminal) performs voice communication with a user (a user B on a far-end side) using the communication device 54 (a far-end terminal). A voice signal input via the communication device 54 is amplified and output by the speaker 52, and a voice emitted by the user on the near-end side is collected by the microphone 51 and transmitted to the communication device 54, whereby the user A can make an amplified voice call (hands-free call) without holding the communication device 53. The communication device 53 and the communication device 54 are connected together by a general telephone line and mutual calls are possible.

The echo suppressing device 1 is provided in a transmitter-side signal path for transmitting an input signal input from the microphone 51 from the terminal 50 to the communication device 53, and removes an echo from the input signal.

The echo suppressing device 1 may be constructed as a dedicated board mounted on the terminal 50 in the voice communication system 100, for example. The echo suppressing device 1 may include hardware and software (echo suppressing program) of a computer, for example. The echo suppressing program may be stored in advance in an HDD as a storage medium built into equipment such as a computer and a ROM in a microcomputer including a CPU, and may be installed therefrom into a computer. The echo suppressing program may be temporarily or permanently stored in a removable storage medium such as a semiconductor memory, a memory card, an optical disc, a magneto-optical disk, a magnetic disk, or the like.

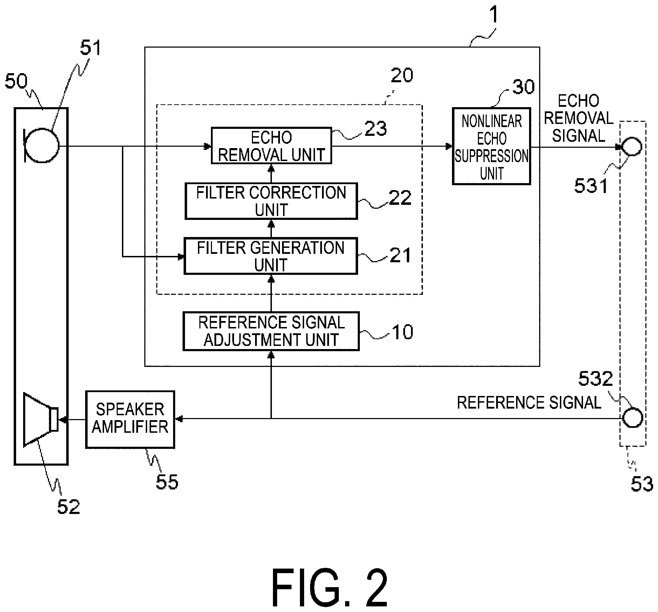

FIG. 2 is a block diagram illustrating a schematic configuration of the echo suppressing device 1. The echo suppressing device 1 is connected between the microphone 51 and a signal input end 531 on a transmitter side of the communication device 53. In FIG. 2, an upper signal path is a transmitter-side signal path through which an input signal input from the microphone 51 is transmitted, and a lower signal path is a receiver-side signal path through which a signal is transmitted to the speaker 52.

The input signal picked up by the microphone 51 and the voice signal received by the communication device 53 are input to the echo suppressing device 1. The echo suppressing device 1 removes an echo of the input signal based on a reference signal, which is a voice signal received by the communication device 53 and transmitted through the receiver-side signal path, and outputs the input signal to the signal input end 531 on the transmitter side.

The echo suppressing device 1 primarily includes a reference signal adjustment unit 10, a linear echo suppression unit 20, and a nonlinear echo suppression unit 30. Note that the echo suppressing device 1 may further include a general configuration related to noise canceling.

The reference signal adjustment unit 10 is a functional unit that acquires a reference signal input from a signal output end 532 on the receiver side and generates a delay reference signal based on the reference signal. The reference signal adjustment unit 10 generates a plurality of delay reference signals by applying a plurality of delay times different from one another.

The linear echo suppression unit 20 is a functional unit that generates an adaptive filter using a reference signal and suppresses a linear echo in an input signal. The adaptive filter used by the linear echo suppression unit 20 has a linear filter characteristic. The linear echo suppression unit 20 primarily includes a filter generation unit 21, a filter correction unit 22, and an echo removal unit 23.

The filter generation unit 21 is a functional unit that obtains a convergence value of the adaptive filter based on the delay reference signal generated by the reference signal adjustment unit 10. The filter generation unit 21 is configured to be able to execute a learning algorithm using linear processing. The learning algorithm by the linear processing is, for example, NLMS or LMS, but is not limited thereto, and any known algorithm can be applied.

The filter generation unit 21 is formed of an adaptive filter with a nonrecursive (finite impulse response (FIR)) filter as shown in Equation (1), for example. In Equation (1), x(k) is an input signal, y(k) is an output signal, and h(l) is a filter coefficient of a multiplier. l is an index of a coefficient, and N is a filter length.

[Equation 1]

$$y(k) = \sum_{l=0}^{N-1} h(l)x(k-l) \quad \cdot \cdot \cdot (1)$$

The filter generation unit 21 acquires the plurality of delay reference signals and obtains a plurality of convergence values of the adaptive filter based on the respective delay reference signals. The convergence value of the adaptive filter includes a convergence value of a filter coefficient of each index of the nonrecursive filter. The filter generation unit 21 stores the convergence value of the adaptive filter in an appropriate storage unit.

Note that the filter generation unit 21 can determine that the adaptive filter has converged, for example, when the variation in the convergence value falls within a certain range, when the convergence value falls within a certain range, or when a certain time has elapsed from the start of the processing.

The filter correction unit 22 is a functional unit that corrects the adaptive filter generated by the filter generation unit 21. The filter correction unit 22 corrects the adaptive filter converged by the delay reference signal to which a predetermined delay time is applied, based on the adaptive filter converged by the delay reference signal to which another delay time is applied. The predetermined delay time is a delay time estimated by, for example, the time from being output from the speaker 52 and being picked up by the microphone 51 in the voice communication system 100. The filter correction unit 22 will be described in detail later.

The echo removal unit 23 is a functional unit that removes a linear echo from the input signal picked up by the microphone 51. The echo removal unit 23 removes a linear echo using the adaptive filter corrected by the filter correction unit 22. Since the processing of the echo removal unit 23 is already known, the description thereof will be omitted. The signal output from the echo removal unit 23 is input to the nonlinear echo suppression unit 30.

The nonlinear echo suppression unit 30 is a functional unit that executes a learning algorithm using nonlinear processing. The learning algorithm using the nonlinear processing can be applied with a discretionary known algorithm. The signal output from the nonlinear echo suppression unit 30 is output to the signal input end 531 on the transmitter side, and is transmitted to the communication device 54 of the user B via the communication device 53. Note that the nonlinear echo suppression unit 30 is not essential.

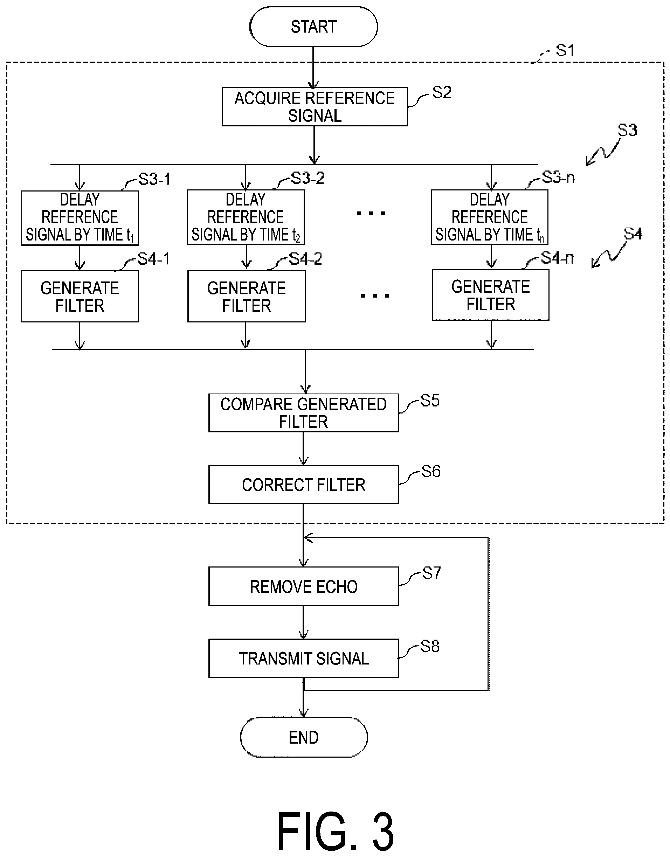

FIG. 3 is a flowchart showing a flow of processing performed by the echo suppressing device 1. First, the echo suppressing device 1 performs learning processing (step S1). The learning processing may be performed in advance or may be performed when the echo suppressing device 1 or a predetermined function of the echo suppressing device 1 is activated. That is, the echo suppressing device 1 may perform the learning processing (step S1) only once before linear echo removal processing (step S7) of removing a linear echo by applying the adaptive filter to the input signal.

The learning processing (step S1) includes steps S2 to S6. In the learning processing (step S1), first, the reference signal adjustment unit 10 acquires the reference signal from the signal output end 532 on the receiver side (step S2), delays the reference signal by times t1, t2, ..., tn, and generates the plurality of delay reference signals (step S3). Next, the filter generation unit 21 obtains convergence values of the adaptive filter learned based on each delay reference signal (step S4).

Note that steps S3-1 to S3-n constituting step S3 may be performed simultaneously or sequentially. Step S4 includes steps S4-1 to S4-n, which are performed subsequently to steps S3-1 to S3-n, respectively.

Next, the filter correction unit 22 compares the plurality of convergence values of the adaptive filter generated in step S4 (step S5), and corrects the adaptive filter based on the comparison result (step S6).

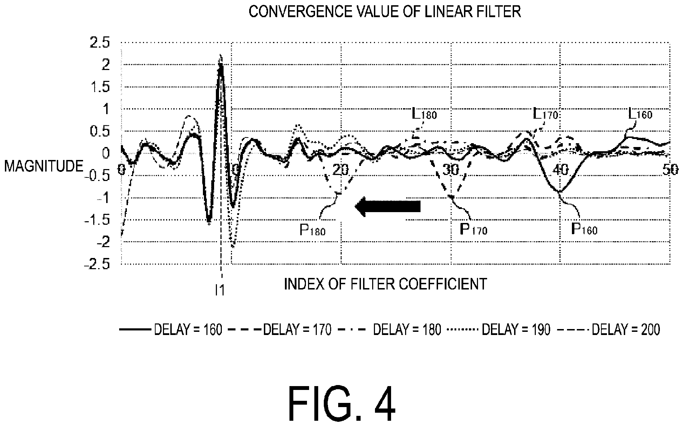

FIG. 4 is a graph showing processing in which the filter correction unit 22 compares the plurality of convergence values of the adaptive filter generated by the filter generation unit 21 with one another. In FIG. 4, the horizontal axis represents the index of the filter coefficient, and the vertical axis represents the magnitude of the convergence value. FIG. 4 shows values when the delay time tn (n is a natural number) is 160, 170, 180, 190, and 200 (units are samples). Note that the sampling frequency at the time of creating the graph shown in FIG. 4 is 16 kHz, and the sampling interval in a case of 160 samples, for example, is 10 msec. However, the sampling frequency is not limited thereto.

In a graph L160 of the adaptive filter generated based on the delay reference signal having a delay time of 160 msec, a peak of + appears at an index of 9, and a peak of - (peak P160) appears at 40. The peak P160 is an element that changes in accordance with the change in the delay time tn, and moves in the lateral direction in accordance with the change in the delay time tn. For example, the peak P160 moves to a peak P170 (index is 30) in a graph L170 of the adaptive filter generated based on the delay reference signal having a delay time of 170 msec, and moves to a peak P180 (index is 20) in a graph L180 of the adaptive filter generated based on the delay reference signal having a delay time of 180 msec. That is, in the example shown in FIG. 4, the larger the delay time applied to the reference signal is, the smaller the index of the filter coefficient at which the peak appears is. In this manner, the peak that changes in accordance with the delay time indicates that an appropriate acoustic path has been learned.

Determination of the presence or absence of movement of the peak can be applied with a known appropriate technique such as determining the presence or absence of movement by pattern matching, for example.

On the other hand, in the graph L160, the peaks occurring at 9 indices do not move in the lateral direction even if the delay time tn is changed, and no change in accordance with the delay time tn occurs. In a case of falling into an erroneous local optimal solution, there is a high probability that a peak occurs in the same filter coefficient regardless of the applied delay time. Also in a case where a signal other than the voice signal from the signal output end 532 on the receiver side is mixed into the reference signal, as a result of being transmitted without being affected by the delay, a peak may occur in the same filter coefficient regardless of the applied delay time. Mixture of the signal can occur, for example, when a signal, generated noise, or the like goes around on a substrate of a CPU, when the autocorrelation of the reference signal is high, or when a signal that greatly changes immediately after the speaker amplifier 55 goes around via a wiring. Mixture of the signal may also occur due to shaking of the echo suppressing device 1 itself.

Therefore, the filter correction unit 22 corrects the adaptive filter for an element (index I1) that does not change in accordance with the delay time, and decreases the magnitude of the filter coefficient to be smaller than the convergence value (decreases a learning update width). In the present embodiment, the filter correction unit 22 sets the filter coefficient of the index I1 to 0 (stops learning). This can remove the influence of inappropriate learning from the adaptive filter used for echo removal and improve the adaptive filter to an appropriate adaptive filter. Note that a form of setting the filter coefficient to 0 (stopping learning) is included in a form of decreasing the magnitude of the filter coefficient (decreasing the learning update width).

Note that the filter correction unit 22 determines whether or not to extract an element (index) based on a threshold. In the example shown in FIG. 4, the filter correction unit 22 extracts the 9 indices having convergence values equal to or greater than the threshold as elements that do not change in accordance with the delay time tn, and does not extract other indices.

For example, the filter correction unit 22 may have a discretionary value as the threshold. For example, the user may set in advance the threshold based on a design value or an experimental value of the microphone 51 and the speaker 52 that are adopted. According to this configuration, the processing of calculating the threshold becomes unnecessary, and thus the processing can be simplified.

For example, the filter correction unit 22 may obtain the threshold based on the magnitude of the convergence value. For example, the filter correction unit 22 can obtain the magnitude of the convergence value of each index at a discretionary delay time, and can use, as the threshold, a value in which a predetermined value or a predetermined ratio is subtracted from the maximum value of the obtained magnitude. For example, the filter correction unit 22 can obtain one or a plurality of elements that change in accordance with the delay time by pattern matching or the like, can obtain the maximum value of the convergence value of the index that changes in accordance with the delay time, and can use, as the threshold, a value in which a predetermined value or a predetermined ratio is subtracted from the obtained maximum value. According to this configuration, an appropriate threshold in accordance with the situation of the reference signal can be automatically determined.

The filter correction unit 22 reduces the magnitude of the filter coefficient when the magnitude of the filter coefficient of the index that does not change in accordance with the delay time is equal to or greater than the threshold obtained or set in this manner. This can reduce the filter coefficient of the index that greatly affects removal of the linear echo.

Note that the filter correction unit 22 may reduce the filter coefficients of indices in the index I1 and a predetermined range before and after the index I1 in consideration of the fact that a peak in an orientation upside down with respect to the index I1 appears in the left and right indices of the index I1 in which a peak that does not change in accordance with the delay time occurs in the graph of the filter coefficient.

The description will now return to FIG. 3. Subsequently to the learning processing (step S1), the echo removal unit 23 removes a linear echo by picking up an input signal from the microphone 51 and applying the input signal with the adaptive filter corrected in step S6 (step S7). The signal from which the linear echo has been removed is output to the communication device 54 after the nonlinear echo is suppressed by the nonlinear echo suppression unit 30 (step S8).

Steps S7 and S8 are continuously performed while the echo suppressing device 1 is in operation. That is, the echo suppressing device 1 removes the linear echo by constantly using the adaptive filter corrected in step S6 performed once by the filter correction unit 22 at the beginning.

According to the present embodiment, a plurality of adaptive filters learned using a plurality of reference signals to which a plurality of different delay times is applied is compared with one another, and a magnitude of a filter coefficient of an element (index) that does not change in accordance with the delay time is set to 0 (learning is stopped), whereby echo removal can be performed using an appropriate adaptive filter to which erroneous learning has not been performed. By stopping the learning of the index that does not change in accordance with the delay time, the calculation load can be reduced, and the processing load of the arithmetic device can be reduced. Since the processing load of the arithmetic device can be reduced, the echo suppressing device 1 can be configured inexpensively.

For example, in order to reduce the processing load of the arithmetic device, a method of setting the initial value of the coefficient of the adaptive filter to an appropriate value is also conceivable. As a method of setting the initial value of the coefficient of the adaptive filter to an appropriate value, for example, it is conceivable a method (method 1) of starting learning with a state in which each filter coefficient is 0 as an initial value, or a method (method 2) of estimating the index and the magnitude (peak value) of the filter coefficient at the index in accordance with physical prior information, that is, the configuration of the device constituting the voice communication system, and setting the coefficients of the other indices to 0. In the method 2, the index of the filter coefficient can be obtained by summing up contributions estimated in each of the speaker amplifier 55, a physical configuration between the speaker 52 and the microphone 51, and appropriate equipment necessary from the microphone 51 to the echo suppressing device 1, and subtracting the contribution by the reference signal adjustment unit 10. The peak value can be obtained by multiplying each contribution of the speaker amplifier 55, the speaker 52, the physical configuration between the speaker 52 and the microphone 51, and appropriate equipment necessary from the microphone 51 to the echo suppressing device 1.

However, the method 1 cannot eliminate the possibility of falling into an erroneous local optimal solution. The method 2 has difficulty in accurately calculating the physical characteristics of the device with a digital value, and cannot eliminate the possibility of falling into a local optimal solution due to an error generated similarly to the method 1. On the other hand, since the echo suppressing device 1 performs echo removal using an appropriate adaptive filter to which erroneous learning has not been performed, accuracy of echo removal is high, and an appropriate adaptive filter can be obtained with a light processing load.

According to the present embodiment, by performing the learning processing (steps S1 to S6) in advance or only once at the time point of activating the predetermined function of the echo suppressing device 1, echo removal can be performed using an adaptive filter to which erroneous learning has not been performed, while reducing the processing load of the arithmetic device.

Note that, in the present embodiment, the filter correction unit 22 sets the filter coefficient of the element (index I1 in FIG. 4) that does not change in accordance with the delay time to 0, but it is not essential to set the filter coefficient to 0, and the filter correction unit 22 may reduce the magnitude of the filter coefficient (reduce the learning update width). For example, the filter correction unit 22 may reduce the magnitude of the filter coefficient of the index I1 and hold a value other than 0 (e.g., 0.5). When the magnitude of the filter coefficient of the index I1 is reduced, learning is performed slightly at the index I1, and therefore appropriate learning can be performed even in a case where an echo path changes due to a change in the environment of the space where the microphone 51 and the speaker 52 exist, or the like.

In the present embodiment, the linear echo removal processing (step S7) is performed using the adaptive filter in which the filter coefficient of the index I1 is set to 0 in the learning processing (step S5), but the linear echo removal processing (step S7) may be performed while gradually reducing the filter coefficient of the index I1 of the adaptive filter. For example, in the example shown in FIG. 4, since the magnitude of the filter coefficient of the index I1 is calculated to be approximately 2, the filter correction unit 22 may set the filter coefficient of the index I1 to 2 at the beginning (t = 0), and continuously correct the adaptive filter during the lapse of a discretionary time (t = 0 to t1) so that the filter coefficient becomes a final value (e.g., 0) after the lapse of a discretionary time (t = t1). In this case, the final value may be 0, or may be a small value other than 0 (e.g., 0.5). This can prevent noise or excessive removal due to a rapid change of the adaptive filter.

In the present embodiment, the filter correction unit 22 extracts an index (index I1 in FIG. 4) having a magnitude of a convergence value equal to or greater than the threshold among the indices that do not change in accordance with the delay time, and reduces the filter coefficient of the extracted index, but the filter correction unit 22 may reduce the filter coefficient of the index that does not change in accordance with the delay time regardless of the threshold. In this case, it is desirable to set the filter coefficient to not 0 but an appropriate value such as 0.5. Due to this, even if unnecessary reduction is once performed, convergence to an appropriate adaptive filter is possible.

<Modification of First Embodiment>

An echo suppressing device 1A according to a modification is different from the echo suppressing device 1 according to the first embodiment by including a plurality of reference signal adjustment units that generate a delay reference signal and including a plurality of filter generation units that generate one filter from each delay reference signal. Note that the same configurations as those in the first embodiment are denoted by the same reference signs, and descriptions thereof will be omitted in the following description.

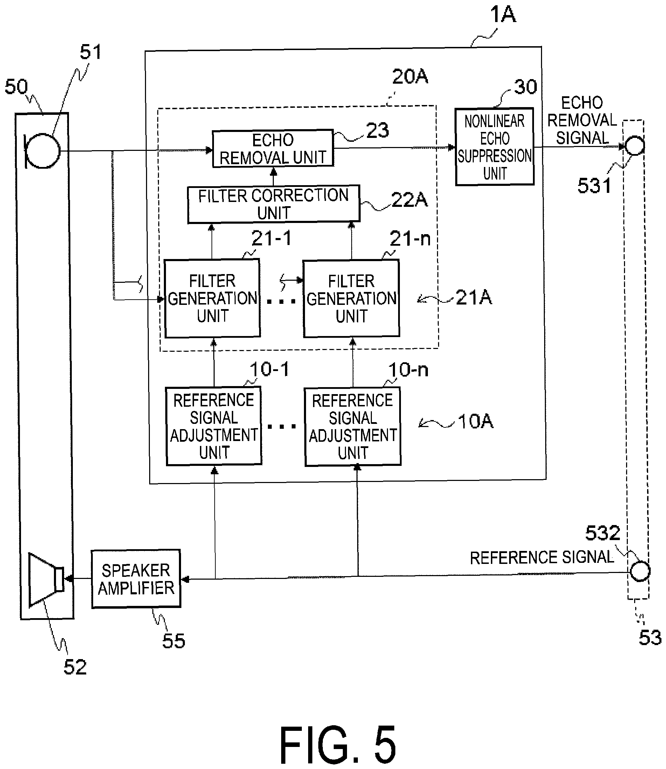

FIG. 5 is a block diagram illustrating a schematic configuration of the echo suppressing device 1A according to a modification of the first embodiment. The echo suppressing device 1A primarily includes a reference signal adjustment unit 10A, a linear echo suppression unit 20A, and a nonlinear echo suppression unit 30.

The reference signal adjustment unit 10A includes a plurality of reference signal adjustment units 10-1, ..., 10-n (n is a natural number). The reference signal adjustment units 10-1, ..., 10-n are functional units that acquire a reference signal and generate a delay reference signal based on the reference signal. The reference signal adjustment units 10-1, ..., 10-n store in advance delay times different from one another. The reference signal adjustment units 10-1, ..., 10-n each generate and output a delay reference signal based on the stored delay time.

The linear echo suppression unit 20A is a functional unit that generates an adaptive filter using a reference signal and suppresses a linear echo in an input signal, and primarily includes a filter generation unit 21A, a filter correction unit 22A, and the echo removal unit 23.

The filter generation unit 21A includes a plurality of filter generation units 21-1, ..., 21-n (n is a natural number). The number of the reference signal adjustment units 10-1, ..., 10-n and the number of the filter generation units 21-1, ..., 21-n are the same.

The filter generation units 21-1, ..., 21-n are functional units that generate adaptive filters based on the delay reference signals output from the reference signal adjustment units 10-1, ..., 10-n, respectively. The processing in which the filter generation units 21-1, ..., 21-n generate adaptive filters is similar to that of the filter generation unit 21, and therefore the description thereof will be omitted.

The filter correction unit 22A is a functional unit that corrects the adaptive filter generated by a discretionary filter generation unit 21 (e.g., the filter generation unit 21-1) in the filter generation units 21-1, ..., 21-n based on the adaptive filters generated by the filter generation units 21-1, ..., 21-n.

The discretionary filter generation unit 21 generates an adaptive filter based on a delay reference signal to which a predetermined delay time (e.g., the delay time estimated by the time from being output from the speaker 52 and being picked up by the microphone 51 in the voice communication system 100) is applied.

The filter correction unit 22A compares the plurality of convergence values of the adaptive filter generated by the filter generation units 21-1, ..., 21-n, and corrects the adaptive filter and reduces the magnitude of the filter coefficient for an element (index) that does not change in accordance with the delay time. The processing in which the filter correction unit 22A corrects the adaptive filter is similar to that of the filter correction unit 22, and therefore the description thereof will be omitted.

The echo removal unit 23 is a functional unit that removes an echo from the input signal picked up by the microphone 51 using the adaptive filter corrected by the filter correction unit 22A.

According to the echo suppressing device 1A of the present modification, since the magnitudes of the filter coefficients generated by the filter generation units 21-1, ..., 21-n are compared, the memory to be used can be reduced. For example, in the echo suppressing device 1, since the filter generation unit 21 sequentially generates the adaptive filters having different delay times, a functional unit that stores the adaptive filters (the magnitudes of the filter coefficients) generated by the filter generation unit 21 is required for the filter correction unit 22. However, in the echo suppressing device 1A, since the filter generation units 21-1, ..., 21-n generate different adaptive filters, a functional unit that stores a plurality of adaptive filters is unnecessary in comparing the plurality of adaptive filters, and the memory to be used can be reduced.

<Second Embodiment>

The echo suppressing device 1 according to the first embodiment of the present invention performs the learning processing (step S1) only once (e.g., in advance or at the time of activation of the echo suppressing device 1), but the echo suppressing device may continuously perform the learning processing.

An echo suppressing device 2 according to the second embodiment of the present invention is configured to continuously perform learning processing (step S1), that is, correction of the adaptive filter. The echo suppressing device 2 will be described below mainly regarding parts different from those of the first embodiment. Note that the same configurations as those in the first embodiment are denoted by the same reference signs, and descriptions thereof will be omitted in the following description.

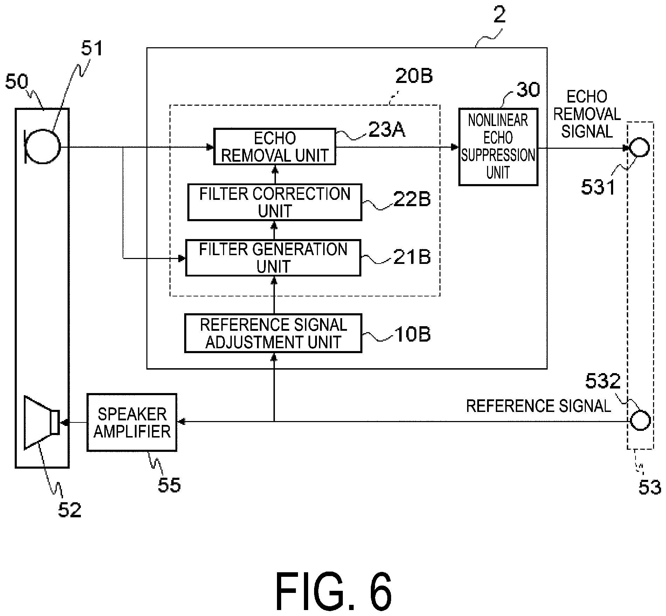

FIG. 6 is a block diagram illustrating a schematic configuration of the echo suppressing device 2. The echo suppressing device 2 primarily includes a reference signal adjustment unit 10B, a linear echo suppression unit 20B, and the nonlinear echo suppression unit 30.

The reference signal adjustment unit 10B is a functional unit that continuously acquires a reference signal and continuously generates a delay reference signal based on the reference signal. The reference signal adjustment unit 10B continuously generates a delay reference signal while acquiring the reference signal. The processing performed by the reference signal adjustment unit 10B is similar to that of the reference signal adjustment unit 10, but is different in continuously performing the processing.

The linear echo suppression unit 20B is a functional unit that generates an adaptive filter using a reference signal and performs processing of suppressing a linear echo in an input signal. The linear echo suppression unit 20B primarily includes a filter generation unit 21B, a filter correction unit 22B, and an echo removal unit 23A.

The filter generation unit 21B is a functional unit that continuously obtains a convergence value of the adaptive filter based on the delay reference signal continuously generated by the reference signal adjustment unit 10B. The processing performed by the filter generation unit 21B is similar to that of the filter generation unit 21, but is different in continuously performing the processing.

The filter correction unit 22B is a functional unit that continuously corrects the adaptive filter continuously generated by the filter generation unit 21B. The processing performed by the filter correction unit 22B is similar to that of the filter correction unit 22, but is different in continuously performing the processing.

The echo removal unit 23A is a functional unit that removes an echo from the input signal picked up by the microphone 51. The adaptive filter corrected by the filter correction unit 22B is continuously input to the echo removal unit 23A, and the echo is removed using the adaptive filter continuously input. The processing performed by the echo removal unit 23A is different from the processing performed by the echo removal unit 23 in the adaptive filter to be used, but the other is similar. The signal output from the echo removal unit 23A is input to the nonlinear echo suppression unit 30.

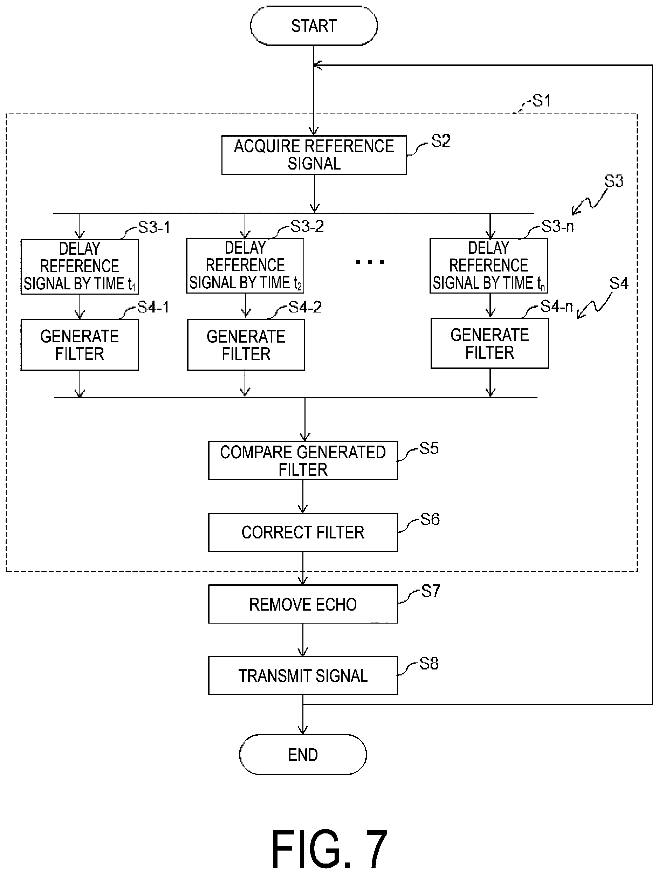

FIG. 7 is a flowchart showing a flow of processing performed by the echo suppressing device 2. While the echo suppressing device 2 operates and acquires a reference signal, for example, during a call, the learning processing (step S1), the echo removal processing (step S7), and the signal output processing (step S8) are continuously performed.

According to the present embodiment, while the echo suppressing device 2 operates and acquires the reference signal, the learning processing, that is, the processing of correcting the adaptive filter is continuously performed, and echo removal is performed using the continuously corrected adaptive filter, and therefore the echo can be appropriately removed even when the echo path changes during use.

<Third Embodiment>

The echo suppressing device 2 according to the second embodiment of the present invention continuously performs the learning processing (correction of the adaptive filter), but the correction of the adaptive filter may be stopped under a specific condition.

An echo suppressing device 3 according to the third embodiment of the present invention stops correction of the adaptive filter in a case of double-talk. The echo suppressing device 3 will be described below mainly regarding parts different from those of the first and second embodiments. Note that the same configurations as those in the first and second embodiments are denoted by the same reference signs, and descriptions thereof will be omitted in the following description.

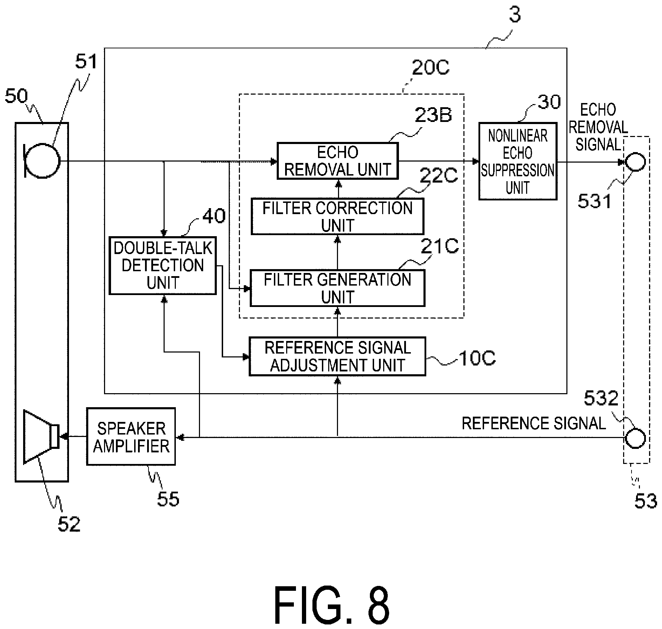

FIG. 8 is a block diagram illustrating a schematic configuration of the echo suppressing device 3. The echo suppressing device 2 primarily includes a reference signal adjustment unit 10C, a linear echo suppression unit 20C, the nonlinear echo suppression unit 30, and a double-talk detection unit 40.

The double-talk detection unit 40 is a functional unit that detects whether a voice signal input to the echo suppressing device 3 is in a single-talk state or a double-talk state. Here, the single-talk is a state (near-end speech or far-end speech) in which any one of the user A and the user B emits a voice and a signal is transmitted to any one of the transmitter-side signal path or the receiver-side signal path. The double-talk is a state (near-end speech or far-end speech) in which both the user A and the user B emit voices and signals are simultaneously transmitted to the transmitter-side signal path and the receiver-side signal path.

The double-talk detection unit 40 sequentially compares the value of the power spectrum of a reference signal and the value of the power spectrum of an input signal for each frequency band, and detects whether or not it is in a double-talk state based on the comparison result. For example, the double-talk detection unit 40 holds a frequency mask acquiring the maximum value among the values of the power spectrum of the signal transmitted through the transmitter-side signal path at the time of one-side speech (single-talk) on the far-end side where only the sound output from the speaker 52 is input to the microphone 51, compares the value of the power spectrum of the input signal picked up by the microphone 51 with the value of the frequency mask for each frequency band, and detects that the sound is input from the microphone 51 and the signal is transmitted through the transmitter-side signal path (with near-end speech) when the number of frequency bands in which the value of the input signal exceeds the value of the frequency mask is equal to or greater than a certain value. For example, the double-talk detection unit 40 compares the value of the power spectrum of the reference signal with the value of the frequency mask for each frequency band, and when the number of frequency bands in which the value of the reference signal exceeds the value of the frequency mask is equal to or greater than a certain value, detects that a signal is transmitted through the receiver-side signal path (with far-end speech).

However, the double-talk detection unit 40 may detect whether it is in the single-talk state or the double-talk state by using various other known methods.

The detection result by the double-talk detection unit 40 is input to the reference signal adjustment unit 10C. The reference signal adjustment unit 10C is a functional unit that continuously acquires a reference signal and continuously generates a delay reference signal based on the reference signal in a case of not being in a double-talk state. The processing in which the reference signal adjustment unit 10C continuously generates the delay reference signal is similar to that of the reference signal adjustment unit 10B, and therefore the description thereof will be omitted. The delay reference signal generated by the reference signal adjustment unit 10C is input to the linear echo suppression unit 20C.

The linear echo suppression unit 20C is a functional unit that generates an adaptive filter using a reference signal and performs processing of suppressing a linear echo in an input signal. The linear echo suppression unit 20B primarily includes a filter generation unit 21C, a filter correction unit 22C, and an echo removal unit 23B.

The filter generation unit 21C is a functional unit that obtains a plurality of convergence values of the adaptive filter based on a delay reference signal when the reference signal adjustment unit 10C generates a delay reference signal. The processing in which the filter generation unit 21C continuously obtains the convergence value of the adaptive filter is similar to that of the filter generation unit 21B, and therefore the description thereof will be omitted.

The filter correction unit 22C is a functional unit that corrects the adaptive filter generated by the filter generation unit 21B when the filter generation unit 21C generates a plurality of adaptive filters. The processing in which the filter correction unit 22C corrects the adaptive filter is similar to that of the filter correction unit 22B, and therefore the description thereof will be omitted.

The echo removal unit 23B is a functional unit that removes an echo from the input signal picked up by the microphone 51. When the adaptive filter corrected by the filter correction unit 22B is input, the echo removal unit 23B removes the echo using the adaptive filter that is input, and when the adaptive filter corrected by the filter correction unit 22B is not input, the echo removal unit 23B removes the echo using the adaptive filter input from the filter correction unit 22B lastly (immediately before). For example, the echo removal unit 23B may include a functional unit that stores the adaptive filter corrected by the filter correction unit 22B, and the echo removal unit 23B may update the adaptive filter stored in the functional unit each time the adaptive filter is input from the filter correction unit 22B and remove the echo from the input signal using the adaptive filter stored in the functional unit. Since the processing of the echo removal unit 23B is already known, the description thereof will be omitted. The signal output from the echo removal unit 23B is input to the nonlinear echo suppression unit 30.

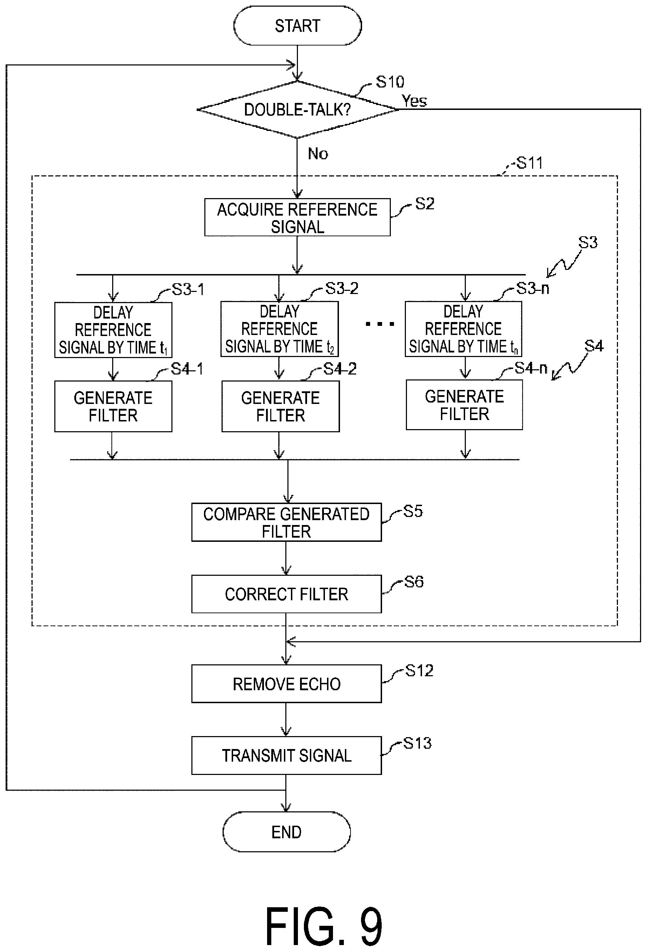

FIG. 9 is a flowchart showing a flow of processing performed by the echo suppressing device 3. While the echo suppressing device 3 operates and acquires a reference signal, for example, during a call, the double-talk detection unit 40 detects whether it is in the single-talk state or the double-talk state (step S10).

When the double-talk state is not detected by the double-talk detection unit 40 (No in step S10), learning processing (step S11) and echo removal processing (step S12) are performed. The processing in step S11 is similar to that in step S1, and therefore the description thereof will be omitted. In step S12, echo removal is performed using the adaptive filter corrected in the immediately preceding step S6.

When the double-talk detection unit 40 detects the double-talk state (Yes in step S10), the learning processing (step S11) is not performed, and the processing proceeds to the echo removal processing (step S12). In the echo removal processing (step S12), the echo is removed using the adaptive filter corrected in step S6 performed immediately before. The processing of removing an echo in the echo removal processing (step S12) is similar to step S7, and therefore the description thereof will be omitted.

Subsequently to the echo removal processing (step S12), signal output processing (step S13) is performed. The processing in step S13 is similar to that in step S8, and therefore the description thereof will be omitted. Thereafter, the processing returns to step S10, and the processing shown in FIG. 9 is repeatedly performed.

According to the present embodiment, when the double-talk detection unit detects double-talk, that is, when there are many disturbances and it is considered that appropriate correction processing cannot be performed, the correction processing of the adaptive filter can be interrupted. The calculation load can be reduced by interrupting the correction processing of the adaptive filter in a situation with many disturbances.

Note that in the present embodiment, the detection result by the double-talk detection unit 40 is input to the reference signal adjustment unit 10C, but the detection result by the double-talk detection unit 40 may be input to the filter generation unit 21C or the filter correction unit 22C. For example, when the detection result by the double-talk detection unit 40 is input to the filter correction unit 22C, a plurality of delay reference signals and a convergence value of the adaptive filter are obtained even in the case of double-talk, and correction of the adaptive filter is stopped.

The embodiments of this invention are described above in detail with reference to the drawings. However, specific configurations are not limited to the embodiments and also include changes in design or the like without departing from the gist of the invention.

Reference Signs List

    1, 1A, 2, 3: Echo suppressing device
    10, 10A, 10B, 10C, 10-1, 10-n: Reference signal adjustment unit
    20, 20A, 20B, 20C: Linear echo suppression unit
    21, 21A, 21B, 21C, 21-1, 21-n: Filter generation unit
    22, 22A, 22B, 22C: Filter correction unit
    23, 23A, 23B: Echo removal unit
    30: Nonlinear echo suppression unit
    40: Double-talk detection unit
    50: Terminal
    51: Microphone

52: Speaker
53: Communication device
54: Communication device
55: Speaker amplifier
100: Voice communication system
531: Signal input end
532: Signal output end

**Claims**

1. An echo suppressing device that removes an echo from an input signal picked up by a microphone of a terminal including a speaker and the microphone, the echo suppressing device comprising:

   a reference signal adjustment unit configured to generate a plurality of delay reference signals by applying a plurality of delay times different from one another to a reference signal transmitted through a receiver-side signal path for transmitting a signal to the speaker;
   a filter generation unit configured to obtain a plurality of convergence values of an adaptive filter based on each of the plurality of delay reference signals;
   a filter correction unit configured to compare the plurality of convergence values and correct the adaptive filter to make a first filter coefficient smaller than the convergence values, the first filter coefficient being a filter coefficient for an element that does not change in accordance with a change in the delay times; and
   an echo removal unit configured to remove a linear echo by applying the adaptive filter corrected by the filter correction unit to the input signal.

2. The echo suppressing device according to claim 1, wherein
   the filter correction unit sets the first filter coefficient to 0.

3. The echo suppressing device according to claim 1 or 2, wherein
   the filter correction unit gradually decreases the first filter coefficient from the convergence value.

4. The echo suppressing device according to any one of claims 1 to 3, wherein
   the filter correction unit sets, as the first filter coefficient, a filter coefficient in a case where the convergence value is equal to or greater than a threshold among elements that do not change in accordance with a change in the delay time.

5. The echo suppressing device according to claim 4, wherein
   the filter correction unit obtains the threshold based on the convergence value.

6. The echo suppressing device according to any one of claims 1 to 5, wherein

   the reference signal adjustment unit continuously generates the plurality of delay reference signals while acquiring the reference signal,
   the filter generation unit continuously obtains the plurality of convergence values, and
   the filter correction unit continuously corrects the adaptive filter.

7. The echo suppressing device according to claim 6, comprising

   a double-talk detection unit configured to detect whether it is a single-talk state or a double-talk state, wherein
   the reference signal adjustment unit generates the plurality of delay reference signals when the double-talk state is not detected.

8. The echo suppressing device according to any one of claims 1 to 5, wherein
   the reference signal adjustment unit generates the delay reference signal only once before the echo removal unit removes a linear echo.

9. An echo suppressing method, comprising:

   a reference signal adjustment step of generating a plurality of delay reference signals by applying a plurality of delay times different from one another to a reference signal transmitted through a receiver-side signal path for transmitting a signal to a speaker of a terminal including the speaker and a microphone;

a filter generation step of obtaining a plurality of convergence values of an adaptive filter based on each of the plurality of delay reference signals;

a filter correction step of comparing the plurality of convergence values and correcting the adaptive filter to make a first filter coefficient smaller than the convergence values, the first filter coefficient being a filter coefficient for an element that does not change in accordance with a change in the delay time; and

an echo removal step of removing a linear echo by applying the adaptive filter corrected by the filter correction step to an input signal picked up by the microphone.

10. An echo suppressing program causing a computer to function as:

a reference signal adjustment unit configured to generate a plurality of delay reference signals by applying a plurality of delay times different from one another to a reference signal transmitted through a receiver-side signal path for transmitting a signal to a speaker of a terminal including the speaker and a microphone;

a filter generation unit configured to obtain a plurality of convergence values of an adaptive filter based on each of the plurality of delay reference signals;

a filter correction unit configured to compare the plurality convergence values and correct the adaptive filter to make a first filter coefficient smaller than the convergence values, the first filter coefficient being a filter coefficient for an element that does not change in accordance with a change in the delay time; and

an echo removal unit configured to remove a linear echo by applying the adaptive filter corrected by the filter correction unit to an input signal picked up by the microphone.

FIG. 1

FIG. 2

START

S1

ACQUIRE REFERENCE SIGNAL — S2

S3

DELAY REFERENCE SIGNAL BY TIME $t_1$ — S3-1

DELAY REFERENCE SIGNAL BY TIME $t_2$ — S3-2

· · ·

DELAY REFERENCE SIGNAL BY TIME $t_n$ — S3-n

S4

GENERATE FILTER — S4-1

GENERATE FILTER — S4-2

· · ·

GENERATE FILTER — S4-n

COMPARE GENERATED FILTER — S5

CORRECT FILTER — S6

REMOVE ECHO — S7

TRANSMIT SIGNAL — S8

END

# FIG. 3

FIG. 4

FIG. 5

FIG. 6

FIG. 7

3

20C

51

50

23B

30

ECHO
REMOVAL
SIGNAL

NONLINEAR
ECHO
SUPPRESSION
UNIT

ECHO
REMOVAL UNIT

22C

531

40

FILTER CORRECTION
UNIT

DOUBLE-TALK
DETECTION
UNIT

21C

FILTER GENERATION
UNIT

REFERENCE SIGNAL
ADJUSTMENT UNIT

10C

532

REFERENCE SIGNAL

SPEAKER
AMPLIFIER

55

53

52

# FIG. 8

FIG. 9

# INTERNATIONAL SEARCH REPORT

| International application No. |
|---|
| **PCT/JP2023/024233** |

## A. CLASSIFICATION OF SUBJECT MATTER

*H04B 3/23*(2006.01)i
FI: H04B3/23

According to International Patent Classification (IPC) or to both national classification and IPC

## B. FIELDS SEARCHED

Minimum documentation searched (classification system followed by classification symbols)

H04B3/23

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | JP 7-273691 A (AGENCE SPATIALE EUROP) 20 October 1995 (1995-10-20) | 1-10 |
| A | JP 2011-61449 A (OKI ELECTRIC INDUSTRY CO LTD) 24 March 2011 (2011-03-24) | 1-10 |
| A | JP 2017-98861 A (HITACHI LTD) 01 June 2017 (2017-06-01) | 1-10 |
| A | JP 2009-33549 A (TOSHIBA CORP) 12 February 2009 (2009-02-12) | 1-10 |
| A | JP 2017-199949 A (JVC KENWOOD CORP) 02 November 2017 (2017-11-02) | 1-10 |
| A | JP 2000-196507 A (NEC CORP) 14 July 2000 (2000-07-14) | 1-10 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 August 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/024233**

| Patent document cited in search report | | | Publication date (day/month/year) | Patent family member(s) | | | Publication date (day/month/year) |
|---|---|---|---|---|---|---|---|
| JP | 7-273691 | A | 20 October 1995 | US | 5649011 | A | |
| JP | 2011-61449 | A | 24 March 2011 | US | 2011/0058667 | A1 | |
| | | | | CN | 102025395 | A | |
| JP | 2017-98861 | A | 01 June 2017 | (Family: none) | | | |
| JP | 2009-33549 | A | 12 February 2009 | (Family: none) | | | |
| JP | 2017-199949 | A | 02 November 2017 | US | 2017/0310360 | A1 | |
| JP | 2000-196507 | A | 14 July 2000 | US | 6442274 | B1 | |

Form PCT/ISA/210 (patent family annex) (January 2015)

**EP 4 554 101 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010011265 A